# FASCICULE DE BREVET EUROPEEN

(11) **EP 1 530 274 B1**
(45) Date de publication et mention de la délivrance du brevet: **06.04.2011**
(21) Numéro de dépôt: 04292442.3
(22) Date de dépôt: 14.10.2004
(51) Int. Cl.: H02G 3/06

(54) **Accessoire de racordement d'angle pour goulottes comprenant un compartiment dérivé**
Winkelzubehörverbindungselement für Elektrokanal mit getrenntrem Abzweig
Angle accessory fastening device for electrical channel with compartimented branch

(30) Priorité: 05.11.2003 FR 0312986
(43) Date de publication de la demande: 11.05.2005
(73) Titulaire: Legrand France, 87000 Limoges (FR); Legrand SNC, 87000 Limoges (FR)
(72) Inventeur: Mathieu, Tristan, 21000 Dijon (FR)
(74) Mandataire: Orsini, Fabienne

(56) Documents cités:
- EP-A- 0 921 616
- GB-A- 2 370 698
- US-B1- 6 284 975

## Description

La présente invention concerne un accessoire de raccordement d'angle à disposer à la jonction d'au moins deux goulottes d'orientations différentes.

Elle concerne plus particulièrement un accessoire de raccordement d'angle comprenant une platine qui comporte un fond, une face latérale d'entrée et une face latérale de sortie qui s'étendent perpendiculairement à au moins une cloison perpendiculaire audit fond qui isole l'un de l'autre un premier et un second compartiments, ainsi qu'une face de sortie parallèle à ladite cloison par laquelle, d'une part, ledit premier compartiment débouche directement vers l'extérieur, et, d'autre part, ledit second compartiment débouche également vers l'extérieur via un canal isolé dudit premier compartiment, s'étendant sensiblement perpendiculairement à ladite cloison entre ledit second compartiment et ladite face de sortie.

L'invention trouve une application particulièrement avantageuse dans la réalisation d'un accessoire de dérivation à disposer à la jonction d'une goulotte axiale et de deux goulottes latérales faisant chacune un angle, en pratique, un angle droit, avec la goulotte axiale.

En considérant deux parois formant un dièdre entre elles, la goulotte axiale peut par exemple être disposée à plat sur une des deux parois le long de l'encoignure, et les deux goulottes latérales sont chacune respectivement disposées à plat sur ces deux parois, en courant par exemple en plinthe à la base de celle-ci, les socles des trois goulottes ayant alors une section transversale en forme de U. Mais, la goulotte axiale peut également intervenir en encoignure entre les deux parois, son socle ayant alors une section transversale en forme générale de V.

On connaît déjà du document GB 2 370 698 (voir figure 4E) un accessoire de dérivation comprenant les caractéristiques précitées dont la platine est destinée à être positionnée à plat sur une seule paroi à la jonction de trois goulottes.

Par rapport à l'état de la technique précité, l'invention propose un accessoire de raccordement d'angle, tel que défini en introduction, qui est destiné à être positionner notamment dans l'encoignure formée par deux parois et qui permet de dériver des câbles provenant de tous les compartiments d'une goulotte selon une direction sensiblement perpendiculaire à l'axe de ladite goulotte, tout en les maintenant isolés les uns des autres pour les acheminer dans les compartiments d'une autre goulotte.

Plus particulièrement, selon invention, l'accessoire de raccordement d'angle est caractérisé en ce que la platine comporte deux volets articulés l'un par rapport à l'autre par une charnière pour former un angle entre eux, ledit canal s'étendant à la jointure des deux volets.

D'autres caractéristiques non limitatives et avantageuses de l'accessoire de raccordement d'angle conforme à l'invention sont les suivantes
- ladite cloison est formée de deux demi-cloisons juxtaposées,
- ladite cloison et ledit canal sont formés par deux nervures coudées placées bord à bord,
- lesdites nervures coudées appartiennent à ladite platine, chaque nervure coudée s'élevant perpendiculairement à partir d'une face d'un volet,
- lesdits volets sont articulés l'un par rapport à l'autre par une charnière,
- ladite charnière résulte d'un amincissement de matière lors du moulage d'une seule pièce en matière plastique des volets et de ladite charnière,
- il comporte au moins une paroi formant obstacle s'étendant parallèlement à ladite cloison et obturant une partie de la face de sortie par laquelle débouche vers l'extérieur ledit premier compartiment, et
- chaque paroi formant obstacle est rattachée à un bord de ladite platine par une liaison sécable.

La description qui va suivre en regard des dessins annexés, donnés à titre d'exemples non-limitatifs, fera bien comprendre en quoi consiste l'invention et comment elle peut être réalisée.

Sur les dessins annexés :
- la figure 1 est une vue schématique à plat d'un côté d'un accessoire de raccordement d'angle selon l'invention issu de moulage,
- la figure 2 est une vue schématique à plat d'un autre côté de l'accessoire de raccordement d'angle de la figure 1,
- la figure 3A est une vue schématique en perspective de l'accessoire de raccordement d'angle de la figure 2 replié,
- la figure 3B est une vue schématique en perspective de l'accessoire de raccordement d'angle de la figure 3A prêt à être mis en place à la jonction de plusieurs goulottes,
- la figure 4A est une vue schématique en perspective de l'accessoire de raccordement d'angle de la figure 3B mis en place à la jonction de trois goulottes, à savoir deux goulottes latérales et une goulotte axiale,
- la figure 4B est une vue identique à celle de la figure 4A dans laquelle l'accessoire de raccordement d'angle est fermé par son cache, et
- la figure 4C est une vue identique à celle de la figure 4B dans laquelle les goulottes sont fermées par leur couvercle.

Sur les figures on a représenté un accessoire de raccordement d'angle à disposer à la jonction d'au moins deux goulottes d'orientations différentes.

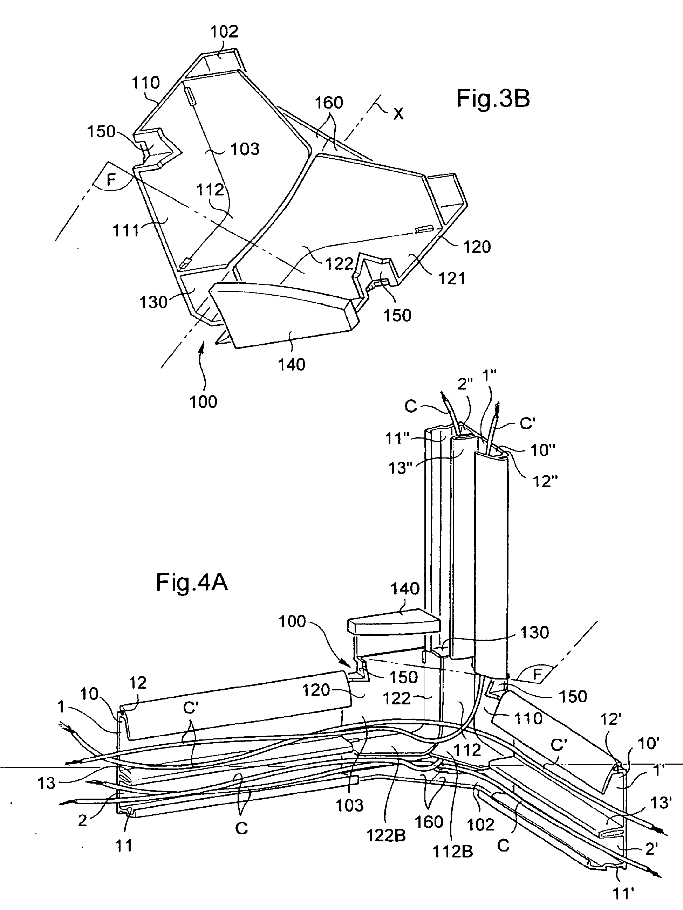

Ici, comme le montrent les figures 4A à 4C, cet accessoire de raccordement d'angle est un accessoire de dérivation particulièrement adapté pour joindre trois goulottes, à savoir une goulotte axiale et de deux goulottes latérales faisant chacune un angle, en pratique, un angle droit, avec la goulotte axiale.

En considérant deux parois formant un dièdre entre elles, le socle 10" de la goulotte axiale est disposé à plat sur une des deux parois le long de l'encoignure formée entre lesdites parois, et les socles 10, 10' des deux goulottes latérales sont chacun respectivement disposés à plat sur ces deux parois, en courant par exemple en plinthe à la base de celle-ci.

Ici, les socles 10, 10', 10" des trois goulottes ont alors une section transversale globalement en forme de U avec deux ailes latérales 11, 12, 11', 12', 11 ", 12" qui bordent un fond. En outre, le socle 10, 10', 10" de chaque goulotte porte une cloison de séparation 13, 13', 13" qui s'élève perpendiculairement à son fond pour séparer l'espace intérieur dudit socle en deux compartiments 1, 2, 1', 2', 1 ", 2" isolés l'un de l'autre. Chaque socle 10, 10', 10" de chaque goulotte est fermé par un couvercle 20, 20', 20" qui est adapté à être rapporté par encliquetage sur les ailes latérales 11, 12, 11', 12', 11", 12" dudit socle 10, 10', 10". Ici les couvercles 20, 20', 20" sont dits recouvrant car ils viennent s'encliqueter sur des bourrelets d'encliquetage situés du côté de la face externe desdites ailes latérales de sorte qu'ils recouvrent les retours portés par lesdites ailes latérales ainsi qu'une partie de celles-ci.

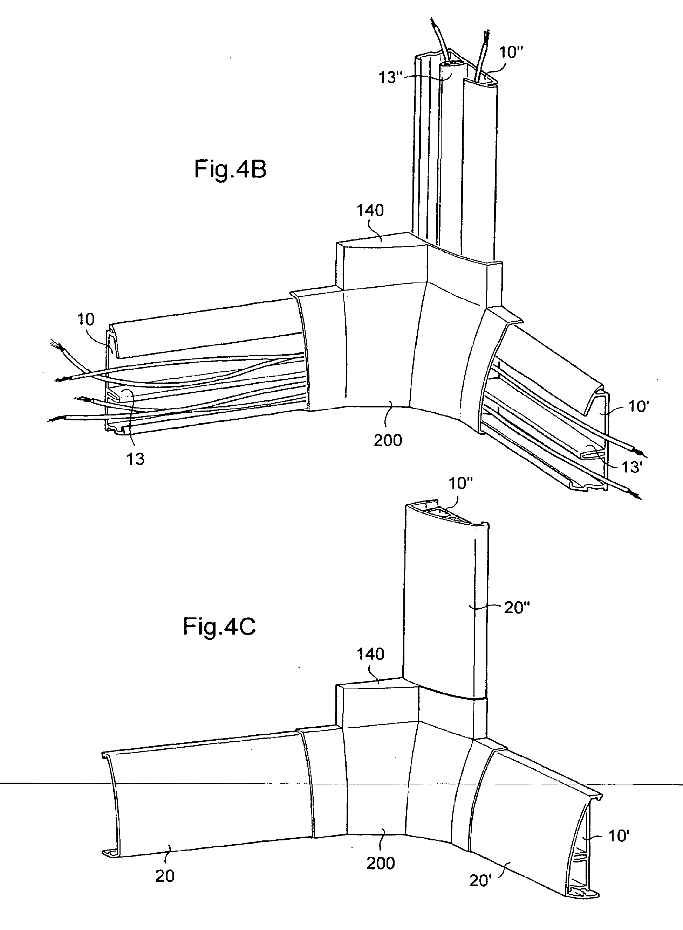

L'accessoire de raccordement d'angle 100, comporte, globalement, d'une part, une platine 100, qui est destinée à se substituer localement au socle 10, 10', 10" de chacune des goulottes (voir figure 4A), et, d'autre part, un cache 200, qui est rapporté sur ladite platine 100 de façon à se substituer localement au couvercle 20, 20', 20" de chacune des goulottes, en recouvrant préférentiellement l'extrémité coupée correspondante de ce couvercle (voir figure 4C).

Bien entendu, la platine 100 et le cache 200 comportent des moyens d'assujettissement qui sont propres à leur maintien respectif par rapport à ces goulottes.

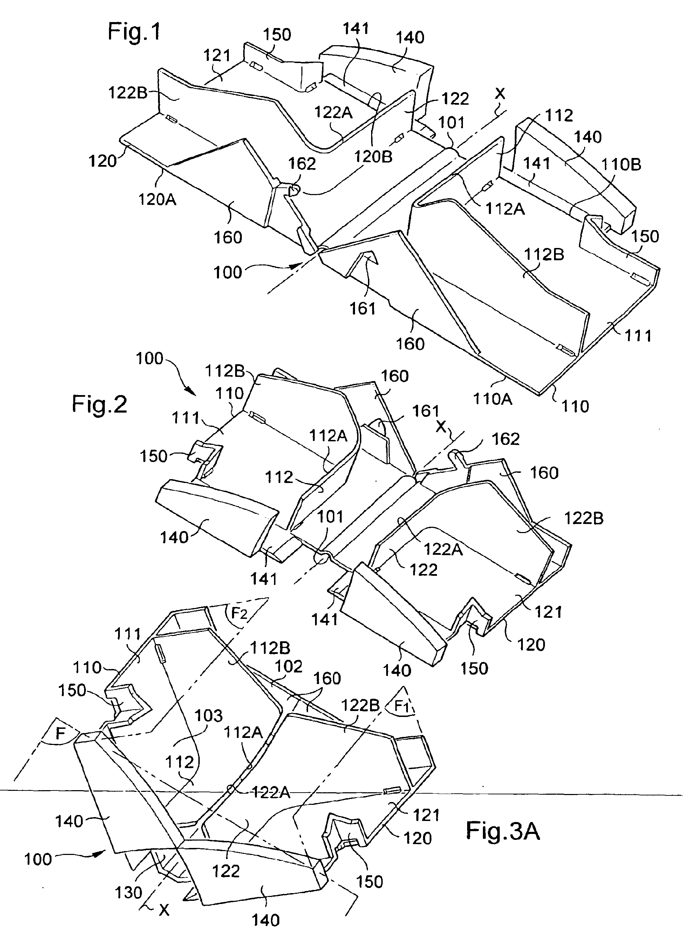

Comme le montrent plus particulièrement les figures 1, 2, 3A et 3B, l'accessoire de raccordement d'angle comporte un premier et un second compartiments 103, 102 définis entre le fond du cache et le fond 111,121 de la platine 100 formant un angle, ces compartiments 103, 102 étant séparés l'un de l'autre par une cloison 112B, 122B qui s'étend perpendiculairement au fond 111, 121 de ladite platine d'un bord d'extrémité transversal à l'autre de celle-ci.

Ici, le premier compartiment 103 est un compartiment supérieur et le second compartiment 102 est un compartiment inférieur (voir figure 4A).

Ici également, la cloison appartient à la platine 100 et est formée de deux demi-cloisons 112B, 122B juxtaposées en angle.

Bien entendu, selon une variante non représentée on pourrait prévoir que ladite cloison appartienne au cache, mais la répartition des câbles dans les compartiments dérivés prévus s'en trouverait quelque peu compliquée.

L'accessoire de raccordement d'angle comporte classiquement une face latérale d'entrée F1 et une face latérale de sortie F2 des câbles et/ou des conducteurs électriques. Ces faces latérales d'entrée F1 et de sortie F2 s'étendent perpendiculairement à ladite cloison 112B, 122B portée par le fond 111,121 de la platine 100. Chacun des premier et second compartiments 103, 102 isolés l'un de l'autre de l'accessoire de raccordement d'angle, débouche alors directement vers l'extérieur par ces faces latérales d'entrée F1 et de sortie F2.

Avantageusement selon l'invention, l'accessoire de raccordement d'angle comporte outre les faces latérales d'entrée F1 et de sortie F2, une face de sortie F, dite face de sortie axiale, parallèle à ladite cloison 112B, 122B, par laquelle, d'une part, ledit premier compartiment 103 débouche directement vers l'extérieur, et, d'autre part, ledit second compartiment 102 débouche également vers l'extérieur via un canal 130 isolé dudit premier compartiment 103, s'étendant sensiblement perpendiculairement à ladite cloison 112B, 122B entre ledit second compartiment 102 et ladite face de sortie F (voir figures 3A, 3B, 4A).

Ladite platine 100 formant un angle, ledit canal 130 est situé dans l'angle formé par ladite platine 100.

Ici, la platine 100 comporte deux volets 110, 120 solidaires l'un de l'autre et ledit canal 130 s'étend à la jointure (matérialisée par l'axe X sur les figures 1, 2, 3A et 3B) des deux volets 110, 120.

Préférentiellement, ladite cloison 112B, 122B et ledit canal 130 sont formés par deux nervures coudées 112, 122 placées bord à bord.

Les parties axiales 112A, 122A (c'est-à-dire les parties s'étendant selon l'axe X) des deux nervures coudées 112, 122, placées bord à bord, forment deux parois du canal 130, et les parties radiales 112B, 122B (c'est-à-dire les parties s'étendant radialement par rapport à l'axe X) des deux nervures coudées 112,122 juxtaposées forment ladite cloison séparant les premier et second compartiments 103, 102 de l'accessoire de raccordement d'angle. Le fond du canal 130 est formé par une partie du fond 111, 121 de la platine 100.

Lesdites nervures coudées 112, 122 appartiennent ici à ladite platine 100, chaque nervure coudée 112, 122 s'élevant perpendiculairement à partir d'une face 111, 121 d'un volet 110, 120.

Avantageusement, lesdits volets 110, 120 sont articulés l'un par rapport à l'autre par une charnière 101 qui s'étend selon l'axe X.

Comme le montrent les figures 1 et 2, ladite charnière 101 résulte d'un amincissement de matière lors du moulage d'une seule pièce en matière plastique des volets 110, 120 et de ladite charnière 101.

En fait, ladite platine 100 est moulée d'une seule pièce à plat (voir les figures 1 et 2) puis les deux volets 110, 120 qui portent chacun une nervure coudée 112, 122 sont rapprochés l'un de l'autre par fermeture de la charnière 101 de manière à mettre bord à bord lesdites parties axiales 112A, 122A desdites nervures coudées 112, 122 pour former simultanément, dans l'angle de ladite platine 100 le canal 130, et les deux compartiments 102, 103.

Sur un bord longitudinal, la platine 100, prise à plat en sortie de moulage, porte deux parois de fermeture 160, rattachées chacune à un bord 110A, 120A d'un volet 110, 120, qui sont parallèles aux demi-cloisons 112B, 122B. Une desdites parois de fermeture 160 comporte une ouverture ou un renfoncement 161, l'autre desdites parois de fermeture 160 comporte un crochet ou dent d'accrochage 162. Ce crochet ou dent d'accrochage 162 est destiné à coopérer avec ladite ouverture ou renfoncement 161 de la première paroi de fermeture 160, lorsque les deux volets 110, 120 sont rapprochés l'un de l'autre, pour maintenir la position en angle desdits volets 110, 120 de la platine 100.

Lorsque la platine 100 forme l'angle voulu, comme représenté sur les figures 3A et 3B, les deux parois de fermeture 160 sont jointives et ferment en partie inférieure l'accessoire de raccordement d'angle. Ledit second compartiment 102 de l'accessoire de raccordement d'angle est alors délimité supérieurement par les deux demi-cloisons 112B, 122B formant ladite cloison et inférieurement par ces parois de fermeture 160.

En outre, sur un autre bord longitudinal opposé à celui portant lesdites parois de fermeture 160, ladite platine 100, prise à plat en sortie de moulage, porte deux parois d'embout 140 également parallèles aux demi-cloisons 112B, 122B formant ladite cloison.

Chacune de ces deux parois d'embout 140 obture une partie de la face de sortie F par laquelle débouche vers l'extérieur ledit premier compartiment 103.

Chaque paroi d'embout 140 est rattachée à un bord correspondant 110B, 120B d'un volet 110, 120 de ladite platine 100 par une liaison sécable 141 de sorte que l'utilisateur peut, à sa convenance, éliminer ladite paroi d'embout afin de donner audit premier compartiment 103 accès par ladite face de sortie F à un des compartiments du socle 10" de la goulotte axiale (voir figures 3B et 4A). Chaque paroi d'embout 140 permet également de fermer supérieurement l'accessoire de raccordement d'angle lorsque le cache 200 est rapporté sur ladite platine 100.

Bien entendu les nervures coudées 112, 122, les parois de fermetures 160 et les parois d'embout 140 sont situées d'un même côté de la platine 100.

Selon le mode de réalisation représenté, elles sont issues du moulage de la platine 100 de sorte qu'elles forment une seule pièce avec les volets 110, 120 et la charnière 101.

Enfin, la platine 100, prise à plat, porte sur ses deux bords transversaux, perpendiculaires aux bords longitudinaux sur lesquels se trouvent les parois de fermeture 160 et d'embout 140, deux parois en coin 150 qui s'élèvent perpendiculairement aux faces 111, 121 desdits volets 110, 120.

Ces parois en coin 150 viennent également avantageusement de formation avec ladite platine 100.

Comme le montre la figure 4A, lorsque la platine 100 de l'accessoire de raccordement d'angle est disposée dans l'encoignure de deux parois formant un dièdre, à la jonction des socles 10, 10', 10" des goulottes latérales et de la goulotte axiale, son fond 121, 111 établit la jonction entre les fonds desdits socles 10, 10', 10", ladite cloison 122B, 112B établit la jonction entre les cloisons de séparation 13, 13' des socles 10, 10' des goulottes latérales, et la nervure coudée 112 établit la jonction entre les cloisons de séparation 13', 13" des socles 10', 10" de la goulotte latérale et de la goulotte axiale situées sur la même paroi.

Le fond 121, 111 de la platine 100 chevauche les fonds des socles 10, 10', 10" de sorte que, d'une part, des parties d'extrémité des parois de fermeture 160 de la platine 100 sont plaquées contre les ailes latérales 11, 11' desdits socles 10, 10' et coincées entre les retours desdites ailes latérales 11, 11' et les fonds correspondants, et, d'autre part, des parties d'extrémités des parois en coins 150 sont plaquées contre les ailes latérales 12, 12', 12" desdits socles 10, 10', 10" et coincées entre les retours d'ailes latérales 12, 12', 12" et les fonds correspondants. De cette manière, la platine 100 est maintenue en place sur les socles 10, 10', 10" en assurant une continuité des ailes latérales desdits socles.

Les premier et second compartiments 103, 102 isolés l'un de l'autre de l'accessoire de raccordement d'angle établissent alors la jonction respectivement, d'une part, entre les compartiments supérieurs 1, 1', des socles 10, 10', et le compartiment 1" du socle 10" de la goulotte axiale, et, d'autre part, entre les compartiments' inférieurs 2, 2', desdits socles 10, 10' et le compartiment 2" de la goulotte axiale.

Le premier compartiment 103 de l'accessoire de raccordement d'angle débouche par lesdites faces latérales d'entrée F1 et de sortie F2 directement dans les compartiments supérieurs 1, 1' des socles 10, 10' des goulottes latérales, et le second compartiment 102 débouche par lesdites faces latérales d'entrée F1 et de sortie F2 directement dans les compartiments inférieurs 2, 2' des socles 10, 10' des goulottes latérales.

En outre, le premier compartiment 103 de l'accessoire de raccordement d'angle débouche par ladite face de sortie axiale F directement dans le compartiment 1" du socle 10" de la goulotte axiale, et le second compartiment 102 débouche par ladite face de sortie axiale F, via le canal 130, isolé du premier compartiment 103, dans le compartiment 2" du socle 10" de la goulotte axiale.

Comme le montre la figure 4A la platine 100 garde seulement une paroi d'embout 140 qui est située du côté du compartiment 2" du socle 10" de la goulotte axiale et qui obture la partie correspondante de la face de sortie axiale F par laquelle débouche vers l'extérieur le premier compartiment 103 du dispositif de raccordement d'angle. L'autre paroi d'embout 140 a été retirée par l'installateur.

Ainsi, Les câbles C situés dans le compartiment inférieur 2 du socle 10 de la goulotte latérale transitent par le compartiment inférieur 102 du dispositif de raccordement d'angle pour être amenés directement dans le compartiment inférieur 2' du socle 10' de l'autre goulotte latérale ou pour être dérivés dans le compartiment 2" du socle 10" de la goulotte axiale via le canal 130, tout en restant isolés des câbles C' situés dans le compartiment supérieur 1 du socle 10 qui transitent par le compartiment supérieur 103 du dispositif de raccordement d'angle pour être amenés directement dans le compartiment supérieur 1' du socle 10' ou pour être dérivés dans le compartiment 1" du socle 10" de la goulotte axiale.

Comme le montre les figures 4B, 4C lorsque le cache 200 du dispositif de raccordement d'angle est rapporté sur la platine 100 la paroi d'embout 140 ferme ledit dispositif de raccordement d'angle en s'adaptant au contour dudit cache 200. Celui-ci comporte par ailleurs des moyens d'accrochage similaire à ceux des couvercles 20 desdites goulottes pour s'accrocher aux ailes latérales correspondantes desdits socles 10, 10', 10".

Ainsi, avantageusement, le dispositif de raccordement d'angle décrit ci-dessus permet de conserver l'isolation entre les différents compartiments de la goulotte axiale et des goulottes latérales.

La présente invention n'est nullement limitée au mode de réalisation décrit et représenté mais l'homme du métier saura y apporter toute variante conforme à son esprit.

## Revendications

1. Accessoire de raccordement d'angle à disposer à la jonction d'au moins deux goulottes d'orientations différentes, comprenant une platine (100) qui comporte un fond, une face latérale d'entrée (F1) et une face latérale de sortie (F2) qui s'étendent perpendiculairement à au moins une cloison (112B,122B) perpendiculaire audit fond qui isole l'un de l'autre un premier et un second compartiments (103,102), ainsi qu'une face de sortie (F) parallèle à ladite cloison (112B,122B) par laquelle, d'une part, ledit premier compartiment (103) débouche directement vers l'extérieur, et, d'autre part, ledit second compartiment (102) débouche également vers l'extérieur via un canal (130) isolé dudit premier compartiment (103), s'étendant sensiblement perpendiculairement à ladite cloison (112B,122B) entre ledit second compartiment (103) et ladite face de sortie (F), **caractérisé en ce que** la platine (100) comporte deux volets (110,120) articulés l'un par rapport à l'autre par une charnière (101) pour former un angle entre eux, ledit canal (130) s'étendant à la jointure des deux volets (110,120).

2. Accessoire de raccordement d'angle selon la revendication 1, **caractérisé en ce que** ladite cloison est formée de deux demi-cloisons (112B,122B) juxtaposées.

3. Accessoire de raccordement d'angle selon l'une des revendications 1 ou 2, **caractérisé en ce que** ladite cloison (112B,122B) et ledit canal (130) sont formés par deux nervures coudées (112,122) placées bord à bord.

4. Accessoire de raccordement d'angle selon la revendication 3, **caractérisé en ce que** lesdites nervures coudées (112,122) appartiennent à ladite platine (100), chaque nervure coudée (112,122) s'élevant perpendiculairement à partir d'une face (111,121) d'un volet (110,120).

5. Accessoire de raccordement d'angle selon l'une des revendications 1 à 4, ladite charnière (101) résulte d'un amincissement de matière lors du moulage d'une seule pièce en matière plastique des volets (110,120) et de ladite charnière (101).

6. Accessoire de raccordement d'angle selon l'une des revendications précédentes, **caractérisé en ce qu'**il comporte au moins une paroi (140) s'étendant parallèlement à ladite cloison (112B,122B) et obturant une partie de la face de sortie (F) par laquelle débouche vers l'extérieur ledit premier compartiment (103).

7. Accessoire de raccordement d'angle selon la revendication 6, **caractérisé en ce que** chaque paroi (140) est rattachée à un bord de ladite platine par une liaison sécable (141).

## Claims

1. A corner connection accessory for placing at the junction between at least two ducts of different orientations, the accessory comprising a plate (100) having a back wall, inlet and outlet side faces (F1, F2), extending perpendicularly to at least one partition (112B, 122B) that is perpendicular to said back wall and that isolates first and second compartments (103, 102) from each other, and an outlet face (F) that is parallel to said partition (112B, 122B) and via which, firstly said first compartment (103) opens directly to the outside, and secondly said second compartment (102) also opens to the outside via a channel (130) that is isolated from said first compartment (103), extending substantially perpendicularly to said partition (112B, 122B) between said second compartment (103) and said outlet face (F), the accessory being **characterized in that** the plate (100) comprises two flaps (110, 120) that are hinged to each other by a hinge (101) so as to form an angle between them, said channel (130) extending along the join between the two flaps (110, 120).

2. A corner connection accessory according to claim 1, **characterized in that** said partition is made up of two juxtaposed half-partitions (112B, 122B).

3. A corner connection accessory according to claim 1 or claim 2, **characterized in that** said partition (112B, 122B) and said channel (130) are formed by two angled ribs (112, 122) placed edge to edge.

4. A corner connection accessory according to claim 3, **characterized in that** said angled ribs (112, 122) form parts of said plate (100), each angled rib (112, 122) extending perpendicularly from a face (111, 121) of a flap (110, 120).

5. A corner connection accessory according to any one of claims 1 to 4, said hinge (101) being the result of a thinning of material during molding of the flaps (110, 120) and said hinge (101) as a single piece of plastics material.

6. A corner connection accessory according to any preceding claim, **characterized in that** it includes at least one wall (140) extending parallel to said partition (112B, 122B) and closing a portion of the outlet face (F) via which said first compartment (103) opens to the outside.

7. A corner connection accessory according to claim 6, **characterized in that** each wall (140) is attached to an edge of said plate via a breakable connection (141).

## Patentansprüche

1. Zubehör für eine Winkelverbindung, das an der Verbindung von mindestens zwei unterschiedlich orientierten Kabelkanälen anzubringen ist, bestehend aus einer Platine (100) mit einem Boden, einer seitlichen Eingangsseite (F1) und einer seitlichen Ausgangsseite (F2), die sich senkrecht zu mindestens einer zum Boden senkrechten Trennwand (112B.122B) erstrecken, die eine erste und eine zweite Kammer (103,102) voneinander isoliert, sowie einer zur Trennwand (112B,122B) parallelen Ausgangsseite (F), durch die zum einen die erste Kammer (103) direkt nach außen mündet, und zum anderen auch die zweite Kammer (102) über einen von der ersten Kammer (103) isolierten Kanal (130) nach außen mündet, der sich im Wesentlichen senkrecht zur Trennwand (112B. 122B) zwischen der zweiten Kammer (103) und der Ausgangsseite (F) erstreckt, **dadurch gekennzeichnet, dass** die Platine (100) zwei über ein Scharnier (101) miteinander verbundene Klappen (110,120) umfasst, um einen Winkel zueinander zu bilden, wobei sich der Kanal (130) entlang der Verbindung der beiden Klappen (110,120) erstreckt.

2. Zubehör für eine Winkelverbindung nach Anspruch 1, **dadurch gekennzeichnet, dass** die Trennwand aus zwei, aneinander liegenden halben Trennwänden (112B.122B) gebildet wird.

3. Zubehör für eine Winkelverbindung nach einem der Ansprüche 1 oder 2, **dadurch gekennzeichnet, dass** die Trennwand (112B.122B) und der Kanal (130) aus zwei abgewinkelten, Rand an Rand liegenden Rippen (112,122) gebildet werden.

4. Zubehör für eine Winkelverbindung nach Anspruch 3, **dadurch gekennzeichnet, dass** die abgewinkelten Rippen (112,122) zur Platine (100) gehören, wobei jede abgewinkelte Rippe (112,122) ausgehend von einer Seite (111,121) einer Klappe (110,120) senkrecht hochsteht.

5. Zubehör für eine Winkelverbindung nach einem der Ansprüche 1 bis 4, wobei das Scharnier (101) aus einer Verdünnung des Werkstoffes beim Gießen zu einem einzigen Kunststoffteil der Klappen (110,120) und des Scharniers (101) entsteht.

6. Zubehör für eine Winkelverbindung nach einem der vorausgehenden Ansprüche, **dadurch gekennzeichnet, dass** es mindestens eine Wand (140) umfasst, die sich parallel zur Trennwand (112B.122B) erstreckt und einen Teil der Ausgangsseite (F) abdichtet, durch die die erste Kammer (103) nach außen mündet.

7. Zubehör für eine Winkelverbindung nach Anspruch 6, **dadurch gekennzeichnet, dass** jede Wand (140) durch eine abtrennbare Verbindung (141) mit einem Rand der Platine verbunden ist.
